# EUROPEAN PATENT SPECIFICATION

(11) **EP 3 276 151 B1**
(45) Date of publication and mention of the grant of the patent: **03.03.2021**
(21) Application number: 17182545.8
(22) Date of filing: 21.07.2017
(51) Int. Cl.: F02K 1/72

(54) **THRUST REVERSER STRUCTURE MOUNTED TO FAN CASE**
AN EINEM BLÄSERGEHÄUSE MONTIERTE SCHUBUMKEHRERSTRUKTUR
STRUCTURE D'INVERSEUR DE POUSSÉE MONTÉE SUR BOÎTIER DE SOUFFLANTE

(30) Priority: 25.07.2016 US 201615218138
(43) Date of publication of application: 31.01.2018
(73) Proprietor: United Technologies Corporation, Farmington, CT 06032 (US)
(72) Inventor: SUCIU, Gabriel L., Glastonbury, CT Connecticut 06033 (US); CHANDLER, Jesse M., South Windsor, CT Connecticut 06074 (US); MERRY, Brian D., Andover, CT Connecticut 06232 (US)
(74) Representative: Dehns

(56) References cited:
- EP-A2- 2 631 181
- FR-A1- 2 914 700
- US-A- 3 503 211
- US-A1- 2010 192 715
- US-A1- 2015 260 126
- US-A1- 2016 025 039

## Description

### BACKGROUND OF THE INVENTION

This application relates to a gas turbine engine having a thrust reverser structure wherein at least a portion of the moveable structure is mounted on a fixed fan case.

Gas turbine engines are known and utilized to power aircraft. In a typical gas turbine engine, a fan delivers air into a bypass duct as bypass air and into a core engine as core air. The air in the core engine passes through a compressor where it is compressed and then passed into a combustor. In the combustor, the compressed air is mixed with fuel and ignited. Products of this combustion pass downstream over turbine rotors driving them to rotate.

A gas turbine engine has a number of components that may sometimes require maintenance. Thus, so-called "D-doors" are provided which may be pivoted between an open and a closed position. In the closed position, the D-doors define a portion of the bypass duct, and an inner housing for covering the core engine. When the D-doors are open, a maintenance operator has access to internal features. Forward of the D-doors is a fixed fan case, which surrounds the fan.

A gas turbine engine for aircraft typically has a thrust reverser function. As aircraft lands, its engines have a thrust reverser which is actuated to begin acting against the momentum carrying the aircraft along the runway. In one standard type of thrust reverse, so-called cascades and blocker doors are actuated once the aircraft has landed. The blocker doors block the bypass duct. The cascades are moved to a position such that they push the blocked air in a forward direction resisting the momentum of any movement of the aircraft.

In the prior art, the cascades have been mounted on the D-doors along with actuation structure. This makes the D-doors very heavy and cumbersome to move to an open position.

A thrust reverser having the features of the preamble of claim 1 is disclosed in US 2015/260126.

### SUMMARY OF THE INVENTION

In a featured embodiment, a gas turbine engine is provided in accordance with claim 1.

In another embodiment the cascades include a plurality of openings for directing air in a direction opposing further movement of an aircraft receiving the gas turbine engine.

In another embodiment according to any of the previous embodiments, blocker doors are moved to a blocking position when the cascades and the outer D-doors portions are moved to the thrust reverse position.

In another embodiment according to any of the previous embodiments, the actuator for the cascades is a ball screw actuator.

In another embodiment according to any of the previous embodiments, a guide for guiding the cascades is provided with a channel receiving a portion moveable with the cascades.

In another embodiment according to any of the previous embodiments, the actuator for the cascades is a ball screw actuator.

In another embodiment according to any of the previous embodiments, blocker doors are moved to a blocking position when the cascades and the outer D-doors portions are moved to the thrust reverse position.

In another embodiment according to any of the previous embodiments, a guide guiding the cascades is provided with a channel receiving a portion moveable with the cascades.

In another embodiment according to any of the previous embodiments, the cascades include a plurality of openings for directing air in a direction opposing further movement of an aircraft receiving the gas turbine engine.

In another embodiment according to any of the previous embodiments, blocker doors are moved to a blocking position when the cascades and the outer D-doors portions are moved to the thrust reverse position.

In another embodiment according to any of the previous embodiments, an actuator for the cascades is a ball screw actuator.

In another embodiment according to any of the previous embodiments, a guide for guiding the cascades is provided with a channel receiving a portion moveable with the cascades.

In another embodiment according to any of the previous embodiments, a guide for guiding the cascades is provided with a channel receiving a portion moveable with the cascades.

In another embodiment according to any of the previous embodiments, blocker doors are moved to a blocking position when the cascades and the outer D-doors portions are moved to the thrust reverse position.

In another embodiment according to any of the previous embodiments, an actuator for the cascades is a ball screw actuator.

In another embodiment according to any of the previous embodiments, a guide for guiding the cascades is provided with a channel receiving a portion moveable with the cascades.

In another embodiment according to any of the previous embodiments, an actuator for the cascades is a ball screw actuator.

In another embodiment according to any of the previous embodiments, a guide for guiding the cascades is provided with a channel receiving a portion moveable with the cascades.

In another embodiment according to any of the previous embodiments, a guide for guiding the cascades is provided with a channel receiving a portion moveable with the cascades.

These and other features may be best understood from the following drawings and specification.

### BRIEF DESCRIPTION OF THE DRAWINGS

Figure 1 schematically shows a gas turbine engine.
Figure 2A schematically shows a gas turbine engine with its thrust reverser stowed.
Figure 2B shows the same engine with the thrust reverser deployed.
Figure 3A shows a first view of the disclosed thrust reverser system in the stowed position.
Figure 3B shows the thrust reverser in the deployed position.
Figure 4A is a view looking at the thrust reverser structure in the stowed position.
Figure 4B shows a detail.
Figure 4C shows yet another detail.

### DETAILED DESCRIPTION

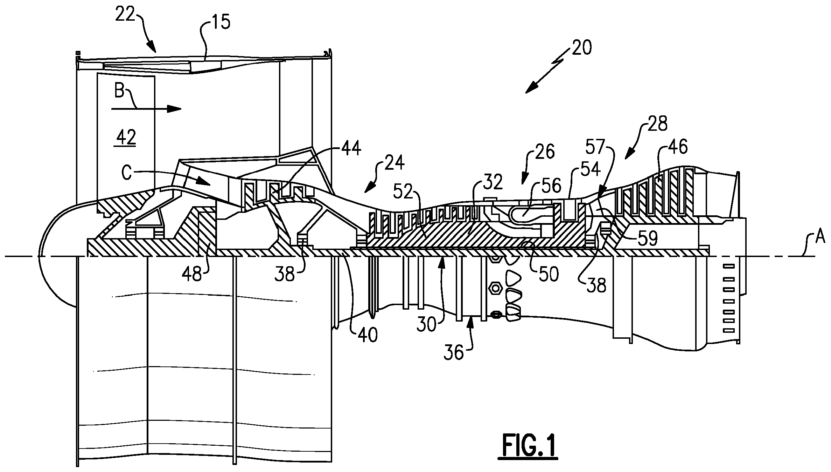

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

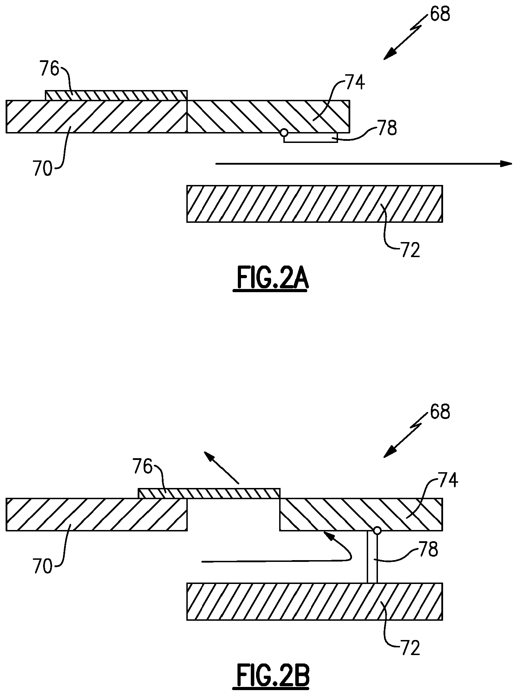

Figure 2A shows a thrust reverser system 68. As shown, a fixed fan case 70 is positioned forwardly of the inner D-door portion 72. An outer D-door portion 74 is moveable as will be explained below. Circumferentially spaced cascades 76 are mounted on the fixed fan case 70. A blocker door 78 is at a non-blocking position. As such, air may flow through the bypass duct.

In Figure 2B, the thrust reverser structure 68 has now been moved to the thrust reverse position.

The blocker door 78 has been pivoted inwardly through some type of mechanism which may be as known in the art. The outer D-door portion 74 and the cascade 76 have been moved rearwardly. The cascade is provided with holes such that air in the bypass duct, which is blocked by the blocker doors 78, will now pass outwardly of the cascade 76 and in a direction resisting further movement of an associated aircraft.

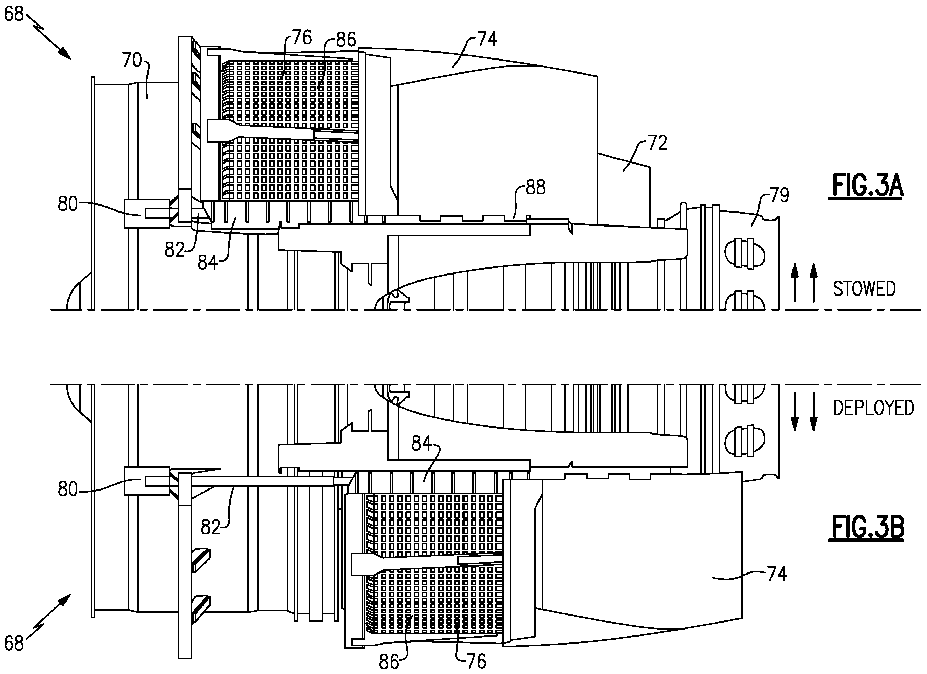

Figure 3A shows the thrust reverser structure 68. As shown, the fan casing 70 receives the cascades 76. Holes 86 are formed in the cascades. A pivot hinge 88 of the outer D-door 74 is shown. In Figure 3A, the thrust reverser structure 68 is in a stowed position. A motor 80 drives a ball screw actuator 82 received within an actuator portion 84 of the cascade 76. The outer D-doors 74 are also mounted on the ball screw actuator 82. A nozzle 79 is shown.

When moved to the deployed position, as shown in Figure 3B, the actuator 82 is driven and causes linear movement of the cascade 76 and the outer D-doors 74 to the position shown in Figure 3B. Since the cascade 76 and its actuation structure are mounted on the fan case, the outer D-door 74 is lighter than in the current arrangements.

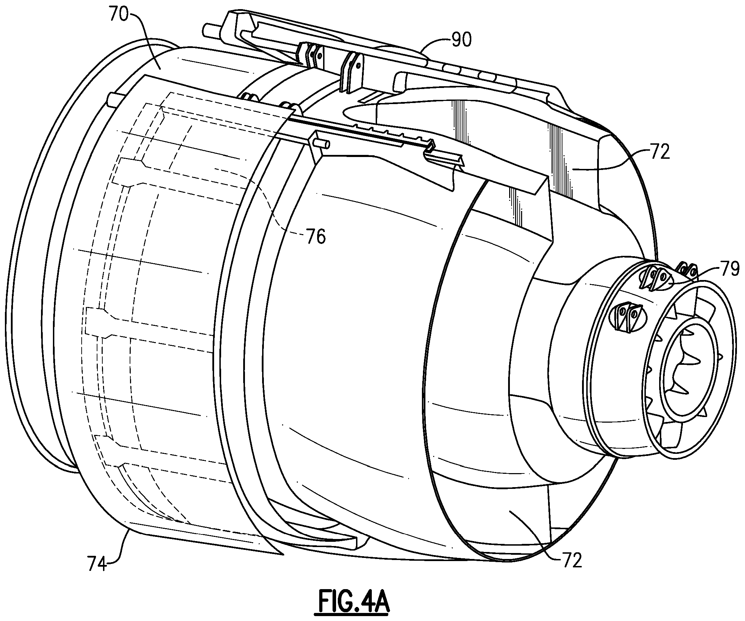

Figure 4A is an outer view and shows a guide structure 90 associated with the ball screw actuator.

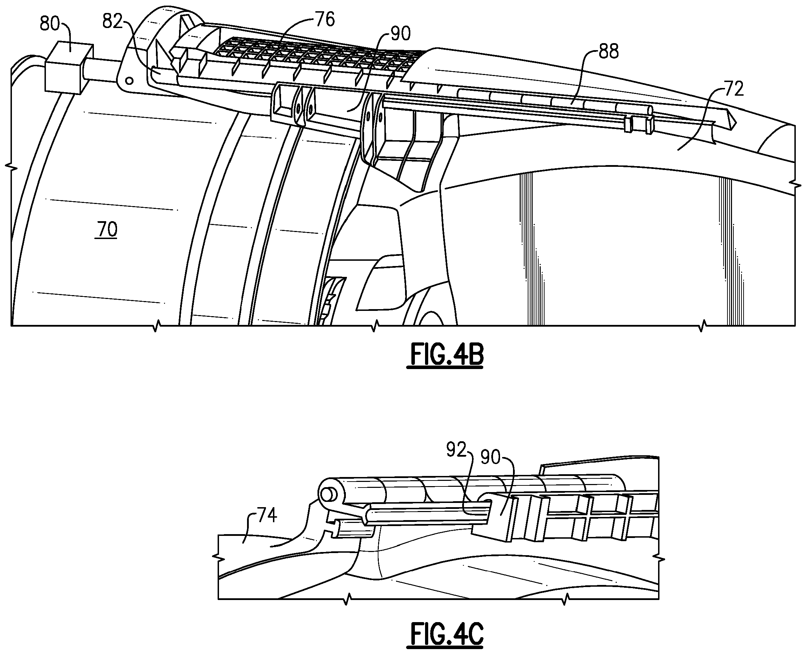

As shown in Figure 4B, structure 90 guides the cascade 76 and is mounted on the fan case 70. In the past, the cascades have been mounted to the D-doors, and do not translate, in general. Some designs have mounted the cascades to the D-doors and translate. However, either design requires the heavy cascade and supporting structure to be mounted to the D-doors. The cascades and structure impart significant loads into the D-doors. Thus, this requires the nacelle to be made much stronger and heavier.

Figure 4C shows a channel 92 in the guide 90 which supports the cascade for movement.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a core engine (36) and a fan (42);
a pivoting inner D-door portion (72);
a pivoting outer D-door portion (74), which is axially moveable relative to said inner D-door portion (72) between a stowed and thrust reverse position;
a fan case (70) surrounding said fan (42); and
a plurality of cascades (76) axially moveable along with said outer D-door portion (74) between a stowed and a thrust reverse position, wherein structure supporting said cascades (76) is mounted on said fan case (70),
**characterised in that**:
an actuator (82) is provided on said fan case (70) for driving said cascades (76) and said outer D-door portion (74) between said stowed and thrust reverse positions.

2. The gas turbine engine (20) as set forth in claim 1, wherein said actuator (82) for said cascades is a ball screw actuator (82).

3. The gas turbine engine (20) as set forth in claim 1 or 2, wherein said cascades (76) include a plurality of openings for directing air in a direction opposing further movement of an aircraft receiving the gas turbine engine (20).

4. The gas turbine engine (20) as set forth in any preceding claim, wherein blocker doors (78) are moved to a blocking position when said cascades (76) and said outer D-door portion (74) are moved to said thrust reverse position.

5. The gas turbine engine (20) as set forth in any preceding claim, wherein a guide (90) for guiding said cascades (76) is provided with a channel (92) receiving a portion moveable with said cascades (76).

## Patentansprüche

1. Gasturbinentriebwerk (20), umfassend:
ein Kerntriebwerk (36) und einen Fan (42);
einen schwenkbaren inneren D-Klappenabschnitt (72);
einen schwenkbaren äußeren D-Klappenabschnitt (74), der axial relativ zu dem inneren D-Klappenabschnitt (72) zwischen einer eingezogenen und einer Schubumkehrposition beweglich ist;
ein Fangehäuse (70), das den Fan (42) umgibt; und
eine Vielzahl von Kaskaden (76), die axial zusammen mit dem äußeren D-Klappenabschnitt (74) zwischen einer eingezogenen und einer Schubumkehrposition beweglich sind, wobei die Struktur, die die Kaskaden (76) stützt, an dem Fangehäuse (70) montiert ist,
**dadurch gekennzeichnet, dass**:
ein Aktuator (82) an dem Fangehäuse (70) zum Antreiben der Kaskaden (76) und des äußeren D-Klappenabschnitts (74) zwischen der eingezogenen und der Schubumkehrposition bereitgestellt ist.

2. Gasturbinentriebwerk (20) nach Anspruch 1, wobei der Aktuator (82) für die Kaskaden ein Kugelgewindeaktuator (82) ist.

3. Gasturbinentriebwerk (20) nach Anspruch 1 oder 2, wobei die Kaskaden (76) eine Vielzahl von Öffnungen zum Leiten von Luft in einer Richtung, die einer weiteren Bewegung eines Luftfahrzeugs, das das Gasturbinentriebwerk (20) aufnimmt, entgegengesetzt ist, beinhalten.

4. Gasturbinentriebwerk (20) nach einem der vorstehenden Ansprüche, wobei Blockierklappen (78) in eine Blockierposition bewegt werden, wenn die Kaskaden (76) und der äußere D-Klappenabschnitt (74) in die Schubumkehrposition bewegt werden.

5. Gasturbinentriebwerk (20) nach einem der vorstehenden Ansprüche, wobei eine Führung (90) zum Führen der Kaskaden (76) mit einem Kanal (92) versehen ist, der einen Abschnitt aufnimmt, der mit den Kaskaden (76) beweglich ist.

## Revendications

1. Moteur à turbine à gaz (20) comprenant :
un moteur central (36) et une soufflante (42) ;
une partie de porte en D intérieure (72) pivotante ;
une partie de porte en D extérieure (74) pivotante, qui est axialement mobile par rapport à ladite partie de porte en D intérieure (72) entre une position repliée et une position d'inversion de poussée ;
un boîtier de soufflante (70) entourant ladite soufflante (42) ; et
une pluralité de cascades (76) axialement mobiles avec ladite partie de porte en D extérieure (74) entre une position repliée et une position d'inversion de poussée, dans lequel la structure supportant lesdites cascades (76) est montée sur ledit boîtier de soufflante (70),
**caractérisé en ce que** :
un actionneur (82) est prévu sur ledit boîtier de soufflante (70) pour entraîner lesdites cascades (76) et ladite partie de porte en D extérieure (74) entre lesdites positions repliée et d'inversion de poussée.

2. Moteur à turbine à gaz (20) selon la revendication 1, dans lequel ledit actionneur (82) pour lesdites cascades est un actionneur à vis à billes (82).

3. Moteur à turbine à gaz (20) selon la revendication 1 ou 2, dans lequel lesdites cascades (76) comportent une pluralité d'ouvertures pour diriger l'air dans une direction opposée à tout autre mouvement d'un aéronef recevant le moteur à turbine à gaz (20).

4. Moteur à turbine à gaz (20) selon une quelconque revendication précédente, dans lequel les portes de blocage (78) sont déplacées vers une position de blocage lorsque lesdites cascades (76) et ladite partie de porte en D extérieure (74) sont déplacées vers ladite position d'inversion de poussée.

5. Moteur à turbine à gaz (20) selon une quelconque revendication précédente, dans lequel un guide (90) pour guider lesdites cascades (76) est pourvu d'un canal (92) recevant une partie mobile avec lesdites cascades (76).
